# EUROPEAN PATENT SPECIFICATION

(11) **EP 1 396 590 B1**
(45) Date of publication and mention of the grant of the patent: **11.05.2005**
(21) Application number: 01941053.9
(22) Date of filing: 14.06.2001
(51) Int. Cl.: E04C 2/52, E04B 2/74, E04F 15/18, E04B 5/48, H02G 3/38

(54) **OFFICE PANEL ARRANGEMENT**
BÜROPANEELANORDNUNG
AGENCEMENT DE PANNEAUX DE BUREAU

(43) Date of publication of application: 10.03.2004
(73) Proprietor: Saruhashi, Nozomu, Kishiwada-shi, Osaka 596-0045 (JP)
(72) Inventor: Saruhashi, Nozomu, Kishiwada-shi, Osaka 596-0045 (JP)
(74) Representative: Schubert, Siegmar, Dipl.-Ing.
(86) International application number: PCT/JP2001/005098
(87) International publication number: WO 2002/103132

(56) References cited:
- EP-A- 0 637 422
- EP-A- 0 743 735
- AU-B- 581 818
- JP-B2- 2 524 636

## Description

### TECHNICAL FIELD

The present invention relates to the positioning structures of partitioning panels that divide office spaces, and cabling floor panels that are laid down on office floors to cover laid communications cables.

### BACKGROUND ART

Until recently, office work places generally took a form in which work was done with a number of desks lined up close and facing each other.

However, with the recent rapid spread of computers, the form of such work places has changed completely, and offices are full of computers, as well as various peripheral devices such as printers, scanners, and drivers. Furthermore, a multitude of communications cables for connecting all these are arranged laid down on the floor.

Thus, if such a multitude of communications cables remains exposed as they are, they may be damaged by people treading on them with shoes, or getting caught in them, and therefore, in recent offices, the floor is made as a double layer structure with cabling floor panels laid out on the office floor, and with communications cables laid out at the bottom of the cabling floor panels. And the office structure is such that desks, chairs, cabinets, and the like are positioned on top of these cabling floor panels, and communications cables are drawn out from a cabling floor panel close to a positioned desk, thus connecting the personal computer or the like that is on the desk.

Also, the office space in many recent offices is divided into a passage way and a multitude of booths positioned along this passageway by partitioning panels of about 1 m to 1.5 m height. An-B-73417/87 discloses such a configuration. In particular, in businesses that take an operational form in which many operators are positioned so as to respond to orders, inquiries, and the like from customers, clients, and the like, such a booth system is often used to prevent the voice of an operator who is responding to a given customer or the like from entering the microphone of an operator in a nearby booth who is responding to another customer or the like.

In this case, as stated above, the floor in recent offices is a double layer structure that is about 10 cm higher than the actual office floor. In other words, the height to the ceiling is lowered by that amount. And since partitioning panels with a height of about 1 m to 1.5 m are positioned on top of the cabling floor panels, there is a problem in that the office space feels cramped. In particular, when sound insulation capabilities are considered important, it is necessary for the partitioning panels to be high, and therefore the problem is further accentuated.

The present invention has been achieved to solve these problems, and an object thereof is to provide an office panel positioning structure in which the layout of communications cables can be laid out as conventionally at the bottom of cabling floor panels, and in which a sense of spaciousness in the office can be maintained while securing sound insulation capabilities between the booths.

### DISCLOSURE OF INVENTION

In order to solve these problems, an office panel positioning structure according to the present invention is characterized by an office space that is divided by partitioning panels into a passageway and a plurality of booths positioned along the passageway, and cabling floor panels are laid down only on the passageway; wherein the floor panels comprise a space capable of storing cables for cabling in a laid state; wherein a lower side surface of the partitioning panels abuts a side surface of the cabling floor panels laid out on the passageway so that the partitioning panels positioned along the passageway are directly positioned on an office floor; and a cable draw-in opening is formed at a side surface portion of the cabling floor panel that adjoins each booth for drawing into the booths the cables that are laid in the space inside the cabling floor panels.

With the present invention having such characteristics, a structure is given in which an office space is divided into a plurality of booths, and cabling floor panels are laid down on only the passageway that connects the booths, so that communications cables run along at the bottom of the cabling floor panels, and are laid out through to the booths. In other words, the floor surface of the passageway portion is one level (about 10 cm) higher than the floor surface of each booth.

On the other hand, the partitioning panels that are positioned along the passageway are directly positioned on the office floor in such a way that a lower side surface of the partitioning panels abut side surfaces of the cabling floor panels that are laid out on the passageway. In other words, since this is not a structure in which the partitioning panels are positioned on the cabling floor panels, the apparent height of the partitioning panels can be lowered by that amount, and the office space becomes a space with a sense of spaciousness. On the other hand, the partitioning panels have the same height as the conventional height, and therefore it is possible to maintain noise insulation capabilities between adjacent booths that are the same as conventionally.

Furthermore, cable draw-in openings are formed at side surface portions of the cabling floor panels that adjoin the booths so that the communications cables that are laid at the bottom of the cabling floor panels can be drawn into the booths, and therefore, since the communications cables that are laid out at the bottom of the cabling floor panels through to the booths can be drawn into the booths from these cable draw-in openings, there is no concern that the communications cables will become exposed at the passageway portion.

### BRIEF DESCRIPTION OF DRAWINGS

Fig. 1 is a perspective view showing one example of an office panel positioning structure according to the present invention.
Fig. 2 is a perspective view showing an enlarged portion of a partitioning panel positioning structure positioned along a passageway.
Fig. 3 is a perspective view showing an enlarged portion of a structure in which communications cables are drawn into a booth.

### BEST MODE FOR CARRYING OUT THE INVENTION

The following is an explanation of an embodiment of the present invention with reference to the accompanying drawings.

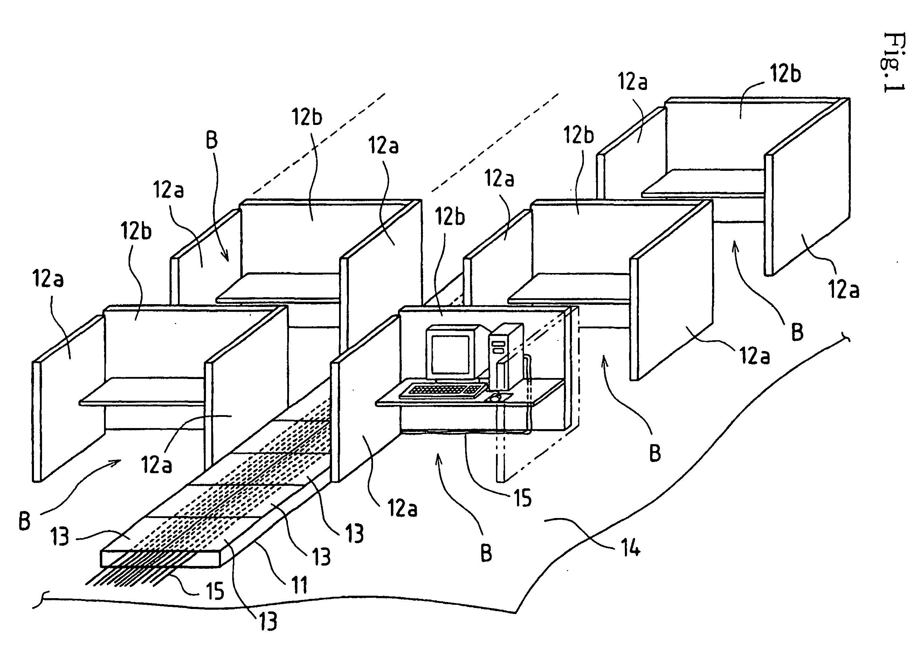

Fig. 1 is a perspective view showing one example of an office panel positioning structure according to the present invention.

In this example, a single passageway 11 passes through an office, and the office structure is arranged so that a plurality of booths B that are divided by a plurality of partitioning panels 12a and 12b are lined up on both the left and right sides of the passageway 11. In actual offices, in consideration of factors such as work efficiency, the passageway 11 can become a more intricate route including cross-shaped paths, T-shaped paths, and the like, and with these the booths B can be divided into various widths and shapes, but the simplest office structure is used here to simplify explanation.

Also, in this embodiment, cabling floor panels 13 are laid down only in the passageway 11 portion, and the office floor 14 itself is exposed as it is in the booths B. In other words, the passageway 11 portion alone is about 10 cm higher than other portions (that is, the floor 14 of the booths B).

It should be noted that detailed explanation concerning the structure of the cabling floor panels 13 will be omitted here since these are already available in the market in various shapes and structures. Generally, however, such panels are of a square shape with a side length of about 50 cm and a thickness of about 10 cm, and communications cables 15 pass through within this 10 cm space. The passageway 11 is made up of a number of these four-sided, 50 cm cabling floor panels 13 that are joined and laid down together.

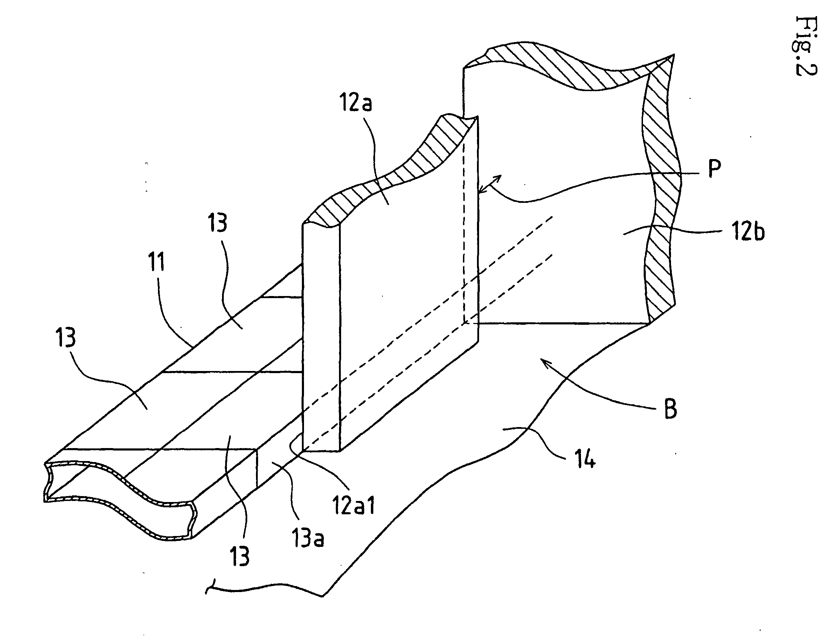

On the other hand, the partitioning panels 12a, 12b, and so on that divide the booths B are directly positioned on the office floor 14. In particular, as shown enlarged in Fig. 2, the partitioning panel 12a that is positioned along the passageway 11 is directly positioned on the office floor 14 in such a way that a lower side surface 12a1 of the partitioning panel 12a abuts a side surface 13a of the cabling floor panel 13 that is laid out on the passageway 11. Similarly, the partitioning panel 12b that is positioned perpendicular to the passageway 11 is also directly positioned on the office floor 14.

In other words, since this is not a structure in which the partitioning panels 12a and 12b are positioned on the cabling floor panels 13, but positioned directly on the office floor 14, the apparent height of the partitioning panels 12a and 12b can be lowered by the portion of the thickness of the cabling floor panels 13 when viewed from the passageway 11. For example, if the height of the partitioning panels 12a and 12b is 1.3 m, then the height of the partitioning panels 12a and 12b will appear to be 1.2 m when viewed from the passageway 11, and therefore a sense of spaciousness is obtainable when looking around the office from the passageway 11. Furthermore, the height of the partitioning panels 12a and 12b when a person is sitting in a chair in the booth B is the same as the height of the partitioning panels 12a and 12b when persons are seated conventionally with the same partitioning panels 12a and 12b and chairs positioned on top of cabling floor panels, and therefore sound insulation capabilities are also secured that are the same as the sound insulation capabilities of conventional offices structures.

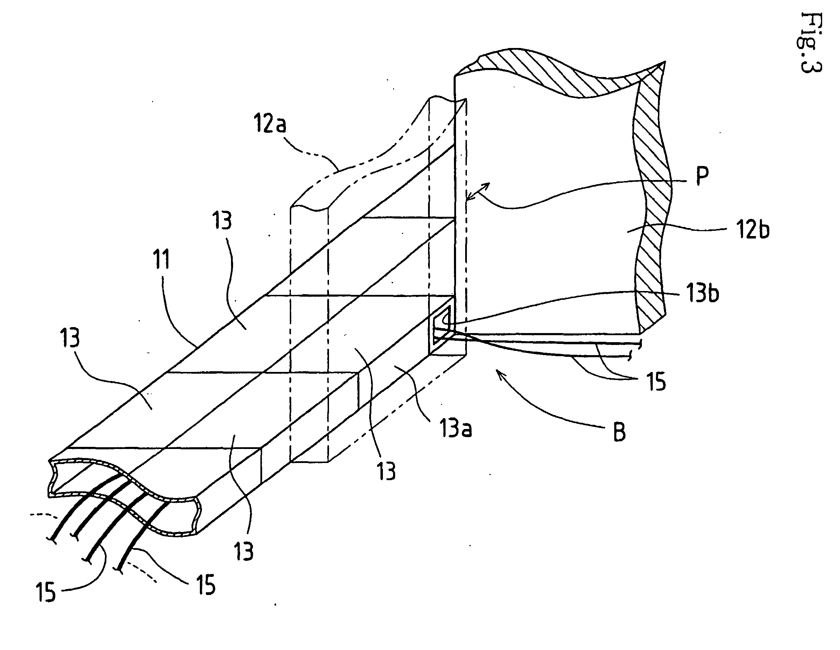

On the other hand, in regard to cabling in the booth B, as shown in Fig. 3, a cable draw-in opening 13b is formed at a portion of the side surface 13a of the cabling floor panel 13 that adjoins the booth B. And the communications cables 15 that are laid at the bottom of the cabling floor panels 13, which are laid out on the passageway 11 through to the booths B, are drawn in from the cable draw-in opening 13b into the booths B. In this way, there is no concern that the communications cables 15 will become exposed at the passageway 11 portion.

It should be noted that, in order for the partitioning panels 12a and 12b not to obstruct the cable draw-in opening 13b, it is also possible in this embodiment to provide a slight gap P between the partitioning panel 12a that is positioned along the passageway 11 and the partitioning panel 12b that is positioned perpendicular to the passageway 11, and to position the booths B so the cable draw-in opening 13b opens at the gap P. In this case, in order to ensure freedom of positioning for the booths B, a plurality of the cable draw-in openings 13b (for example, about three) may be provided at constant intervals on the side surface 13a of a single cabling floor panel 13. And the communications cables 15 may be drawn in as required to the booths B from the cable draw-in opening 13b of an appropriate location.

The drawn in communications cables 15 are laid along the lower edge of the partitioning panel 12b that is positioned perpendicular to the passageway 11, and may be connected to a personal computer unit or the like by being drawn upward from a predetermined position (see Fig. 1). By doing this, the communications cables 15 are laid along the rear side of a desk that is positioned close by the partitioning panel 12b, and therefore there is no concern of them getting caught on an operator's leg or the like.

Furthermore, in the above-described embodiment, in order for the partitioning panels 12a and 12b not to obstruct the cable draw-in opening 13b that is formed at the side surface 13a of the cabling floor panel 13, a slight gap P is provided between the partitioning panel 12a that is positioned along the passageway 11 and the partitioning panel 12b that is positioned perpendicular to the passageway 11, but by forming opening portions (omitted from drawings) for the communications cables 15 to pass through in a plurality of locations at a lower edge portion of the partitioning panel 12a that is positioned along the passageway 11, it is possible to position the partitioning panels 12a and 12b abutting each other.

### INDUSTRIAL APPLICABILITY

As described above, the office panel positioning structure of the present invention is suitable for an office in which various pieces of OA equipment are installed.

## Claims

1. An office panel positioning structure,
wherein an office space is divided by partitioning panels (12a) into a passageway (11) and a plurality of booths (B) positioned along the passageway, **characterised in that**:
cabling floor panels (13) are laid down only on the passageway;
wherein the floor panels comprise a space capable of storing cables (15) for cabling in a laid state;
wherein a lower side surface of the partitioning panels abuts a side surface of the cabling floor panels positioned on the passageway so that the partitioning panels positioned along the passageway are directly positioned on an office floor; and
a cable draw-in opening (13b) is formed at a side surface portion of the cabling floor panel that adjoins each booth for drawing into the booths the cables that are laid in the space inside the cabling floor panels.

## Patentansprüche

1. Büropaneelanordnung, bei der ein Büroraum durch Trennwände (12a ) in einen Gang (11) und eine Vielzahl von längs des Gangs angeordneten Kabinen (B) unterteilt wird, **dadurch gekennzeichnet,**
**daß** Flurkabelpaneele (13) lediglich auf dem Gang verlegt sind, wobei die Flurpaneele einen Raum aufweisen, in welchem Kabel (15) zur Verkabelung in eingelegtem Zustand untergebracht werden können, wobei ein unterer Teil der Seitenfläche der Trennwände an eine Seitenfläche der auf dem Gang verlegten Flurkabelpaneele stößt, so daß die längs des Gangs angeordneten Trennwände direkt auf dem Flurboden des Büros stehen, und an einem Seitenflächenteil des an jede Kabine angrenzenden Flurkabelpaneels eine Kabeleinzugsöffnung (13b) ausgeformt ist, damit die innerhalb des Raum der Flurkabelpaneele angeordneten Kabel in die Kabinen hinein geführt werden können.

## Revendications

1. Structure de placement de panneaux de bureau,
dans laquelle un espace de bureau est divisé par des panneaux de cloisonnement (12a) en une voie de passage (11) et une pluralité de compartiments (8) placés le long de la voie de passage, **caractérisée en ce que** des panneaux de sol (13) de câblage ne sont déposés que sur la voie de passage ;
dans laquelle les panneaux de sol comprennent un espace capable de stocker des câbles (15) pour le câblage dans un état posé ;
dans laquelle une surface latérale inférieure des panneaux de cloisonnement fait appui sur une surface latérale des panneaux de sol de câblage placés sur la voie de passage, de manière que les panneaux de cloisonnement placés le long de la voie de passage soient placés directement sur un sol de bureau ; et
une ouverture à tirer des câbles (13b) est ménagée sur une partie de surface latérale du panneau de sol de câblage qui est contiguë à chaque compartiment pour tirer les câbles dans les compartiments, qui sont posés dans l'espace intérieur des panneaux de sol de câblage.
